(19) Europäisches Patentamt
European Patent Office
Office européen des brevets

(11) Veröffentlichungsnummer: **0 264 717 B1**

(12) **EUROPÄISCHE PATENTSCHRIFT**

(45) Veröffentlichungstag der Patentschrift: **29.05.91**

(51) Int. Cl.5: **G01B 7/00, G01B 21/20**

(21) Anmeldenummer: **87114634.6**

(22) Anmeldetag: **07.10.87**

(54) **Verfahren und Einrichtung zur Messung von Verzahnungen mit Hilfe eines Koordinatenmessgerätes.**

(30) Priorität: **11.10.86 DE 3634688**

(43) Veröffentlichungstag der Anmeldung:
**27.04.88 Patentblatt 88/17**

(45) Bekanntmachung des Hinweises auf die Patenterteilung:
**29.05.91 Patentblatt 91/22**

(84) Benannte Vertragsstaaten:
**CH DE FR LI SE**

(56) Entgegenhaltungen:
**EP-A- 0 027 186**
**DE-A- 2 742 344**
**DE-B- 2 242 355**
**DE-B- 2 804 398**

**VORTRAGSMANUSKRIPT ZUR 8. ARBEITSTA-GUNG DES INSTITUTS FÜR PRODUKTIONS-TECHNIK UND AUTOMATISIERUNG (IPA), Stuttgart, 14/15.09.1977, Seiten 1-29; K. HER-ZOG: "Mess- und Tastsysteme bei Mehrkoordinaten-Messgeräten"**

**V.D.I.-ZEITSCHRIFT, vol. 125, no. 21, November 1983, Seiten M67-M74, Düsseldorf; A. WECKENMANN et al.:**

**"Koordinatenmessgeräte"**

(73) Patentinhaber: **Firma Carl Zeiss**

**W-7920 Heidenheim (Brenz)(DE)**

(72) Erfinder: **Breyer, Karl-Hermann, Dr.**
**Hans-Holbein-Strasse 51**
**W-7920 Heidenheim(DE)**
Erfinder: **Kammleiter, Berndt**
**Riemannstrasse 3**
**W-7082 Oberkochen(DE)**
Erfinder: **Ruck, Otto**
**Ostpreussenstrasse 6**
**W-7080 Aalen(DE)**

## Beschreibung

Zur Durchführung von Verzahnungsmessungen auf einem Mehrkoordinatenmeßgerät wird üblicherweise der gesamte Tastkopf mit Hilfe der verschiebbaren Schlitten des Koordinatenmeßgerätes, an denen er befestigt ist, in der gewünschten Meßrichtung gegen die anzutastende Fläche des Prüflings verfahren, bis der Taststift des Tastkopfes den Prüfling berührt. Sobald der Kontakt zwischen Taststift und Werkstück erkannt ist, wird im Tastkopf ein Regelkreis geschlossen, der die Antriebe der Maschine der vom Tastkopf gemessenen Auslenkung des Taststiftes nachführt, bis sich die Taststiftsauslenkung "Null" ergibt. Erst in dieser Position werden die von den Wegmeßeinrichtungen an den verschiebbaren Teilen der Maschine erfaßten Koordinatenmeßwerte als Meßergebnis übernommen.

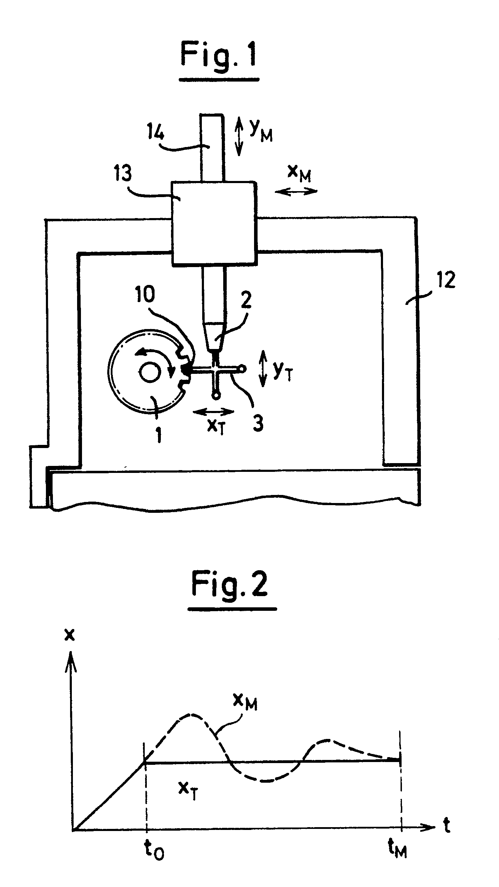

In Folge dieser Betriebsweise ergeben sich relativ hohe Meßzeiten, denn im Zuge des vorstehend geschilderten Regelvorganges findet eine mehrfache Bewegungsumkehr der Maschinenschlitten des Koordinatenmeßgerätes mit ihren doch sehr großen trägen Massen statt. Zur Verdeutlichung wird hier auf die Skizze nach Figur 1 und 2 verwiesen, in der der Weg ($x_M$), den beispielsweise der Querschlitten (13) über dem Portal (12) des Koordinatenmeßgerätes zurücklegt und der Weg ($y_T$), den der am Tastkopf (2) befestigte Taststift (3) zurücklegt, dargestellt sind. Ab dem Antastzeitpunkt ($t_0$) bleibt der Taststift (3) in Ruhe, während der Querschlitten (13) die mit ($x_M$) bezeichnete Regelschwingung ausführt. Erst wenn diese abgeklungen ist, wird zum Zeitpunkt ($t_M$) der Meßwert übernommen.

Wird das Koordinatenmeßgerät wie in Figur 1 skizziert dazu benutzt, um z.B. Rundlauf- oder Teilungsmessungen mit Zweiflankenanlagen der Tastkugel (10) in den Zahnlücken des Stirnrades (1) vorzunehmen, dann tastet der Taststift (3) am Tastkopf (2) des Koordinatenmeßgerätes selbstzentrierend in die Zahnlücke ein und der genannte Regelkreis wird für beide Bewegungsrichtungen (x und y) des Tastkopfes geschlossen. Der anhand von Figur 2 beschriebene, zeitintensive Regelvorgang spielt sich dann in beiden Achsen (x und y) gleichzeitig ab.

Zum Stand der Technik wird an dieser Stelle auf folgende Veröffentlichungen verwiesen:

1. "Dreidimensionale Messung von Zahnflanken an Zylinder- und Kegelrädern" VDI-Bericht 434, VDI-Verlag Düsseldorf 1982

2. "Verzahnungsmessung auf einem Mehrkoordinatenmeßgerät", Sonderdruck zur 12. IPA-Arbeitstagung anläßlich der 5. internationalen Konferenz über automatisches Messen und Prüfen in der Fertigung, Stuttgart 24 - 26. 06. 1980

3. Meß- und Tastsysteme bei Mehrkoordinaten-Meßgeräten" von K.Herzog, Vortragsmanuskript zur 8. Arbeitstagung des Instituts für Produktionstechnik und Automatisierung (IPA), Stuttgart 14 und 15. 09.1977

Kürzere Meßzeiten lassen sich auf speziellen Zahnradmeßgeräten erzielen. Das ist aber mit dem Nachteil verbunden, daß ein nur für eine spezielle Meßaufgabe verwendbares Gerät angeschafft werden muß, mit dem andere Teile, wie z.B. prismatische Werkstücke, nicht vermessen werden können. Daneben besitzen auch Zahnradmeßgeräte Verschiebeschlitten mit relativ hoher Masse, über die der Tastkopf des Zahnradmeßgerätes in der Lücke des z.B. Stirnrades positioniert und auch wieder herausgefahren werden muß, bevor das Zahnrad um eine Teilung weiter bewegt wird. Da also auch bei Zahnradmeßgeräten pro Teilung zweimal ein relativ schwerfälliger Schlitten bewegt wird, ist hier ebenfalls die erreichbare Meßgeschwindigkeit nach unten begrenzt.

Es ist weiterhin bekannt, einen Tastkopf des sogenannten messenden Typs, wie er in der DE-PS 22 42 355 beschrieben ist und der im Tastkopf eingebaute Kraftgeneratoren zur Einstellung der Antastkraft des Taststifts besitzt, dazu zu benutzen, das zu vermessende Werkstück aktiv anzutasten. Hierbei positioniert das Koordinatenmeßgerät oder eine mit einem Tastkopf des genannten Typs versehene Bearbeitungsmaschine den Tastkopf in einer vorgegebenen Sollposition unmittelbar vor der anzutastenden Fläche und anschließend wird der Taststift durch die dann aktivierten Kraftgeneratoren im Tastkopf gegen das Werkstück gedrückt. Da aber der Meßbereich, in dem die Meßsysteme im Tastkopf genaue Meßwerte liefern, sehr viel kleiner als der mögliche Auslenkungsbereich des Taststiftes ist - in der Regel ist der zulässige Meßbereich auf wenige 1/10 mm begrenzt -lassen sich mit dieser Methode nur sehr kurze Entfernungen bis zum Antastpunkt überbrücken. Ein Eintasten in Zahnlücken allein durch Auslenkung des Taststifts ist deshalb nicht ohne weiteres möglich, da andernfalls der zulässige Meßbereich für die Taststiftauslenkung verlassen würde.

Es ist die Aufgabe der vorliegenden Erfindung ein Verfahren zur Durchführung von Verzahnungsmessungen auf Koordinatenmeßgeräten anzugeben, mit dem kurze Meßzeiten erreicht werden können, indem die Zahl der notwendigen Bewegungen der Maschinenschlitten des Koordinatenmeßgerätes minimiert ist.

Diese Aufgabe wird gemäß dem Kennzeichen des Hauptanspruches dadurch gelöst, daß

- der Tastkopf (2) mit zurückgezogenem und außerhalb des zulässigen Meßbereichs (6) befindlichem Taststift (3) in einem vorgegebenen Abstand ($x_{MO}$, $x_{M1}$) gegenüber der zu vermessenden Zahnlücke (11) des Prüflings (1) positioniert und die Antriebe des Koordinatenmeßgerätes in dieser Postion stillgesetzt werden,

- der Taststift (3) anschließend über die Meßkraftgeneratoren relativ zum Tastkopf (2) bewegt und in den Zahnlücke (11) eingefahren wird.

Normalerweise wird der Taststift beim Anfahren eines Prüflings vorausgelenkt, um den im Vergleich zum Meßbereich größeren Auslenkungsbereich im Sinne eines Kollisionsschutzes nutzen zu können. Gemäß der Erfindung wird nun der Tastkopf mit gerade entgegengesetzter, zurückgezogener Stellung des Taststiftes gegenüber dem Prüfling, d.h. der zu vermessenden Zahnlücke positioniert. So ist es möglich, den größeren Auslenkungsbereich des Taststiftes dazu auszunutzen, um bei stillgesetzten Maschinenantrieben allein mit Hilfe der Kraftgeneratoren im Tastkopf in die Zahnlücke einzutasten.

Zweckmäßig ist dann, wenn Verzahnungsmessungen mit Zweiflankenanlage der Tastkugel durchgeführt werden sollen, die vorgegebene Position, in der das Koordinatenmeßgerät stillgesetzt wird, gegenüber der Zahnlücke so gewählt, daß der Taststift bei Anlage der Tastkugel an beiden Flanken der zu prüfenden Zahnlücke gerade im zulässigen Meßbereich für zwei Koordinatenrichtungen (x) und (y) liegt. Das Einfahren in die Zahnlücke kann hierbei mit konstanter Meßkraft erfolgen, bis die Tastkugel in Ruhe beidseitig an den Zahnflanken anliegt. Da sich der Taststift dann nicht weiter bewegt, kann dieser Zustand sehr einfach erkannt werden und unmittelbar darauf der zugehörige Meßwert übernommen werden.

Für die Durchführung von Messungen mit Einflankenanlage der Tastkugel ist das nicht nötig. Hier ist es vielmehr vorteilhaft, wenn der Abstand zwischen der vorgegebenen Position, in der die Maschinenantriebe stillgesetzt sind, und der Zahnlücke so gewählt ist, daß der Taststift mit Hilfe der Kraftgeneratoren entlang einer Koordinate in die Zahnlücke eingefahren wird, bis er an einem im Tastkopf vorzusehenden Präzisionsanschlag zur Anlage kommt, dessen Entfernung zum Nullpunkt des Meßbereiches in dieser Bewegungskoordinate im Rechner des Koordinatenmeßgerätes abgespeichert ist. Denn bei Messungen mit Einflankenanlagen kommt es im wesentlichen darauf an, daß der Taststift nach dem Einfahren in die Zahnlücke mit der tangential zum Teilkreis gerichteten Meßachse im zulässigen Meßbereich beweglich bleibt. Die Herbeiführung der Flankenanlage in dieser zweiten Koordinatenrichtung kann dann entweder durch ein Drehen des Prüflings erfolgen, wenn es sich um Zahn- oder Kegelräder handelt, oder durch ein zusätzliches Auslenken des Taststiftes in dieser zweiten Koordinate. Hier ist es relativ einfach sicherzustellen, daß der Taststift in dem zulässigen Meßbereich dieser Koordinate bleibt, indem der effektive Durchmesser des Tastelementes an die Abmessungen der Zahnlücke angepaßt wird.

Gemäß der Erfindung kann also der komplette Meßvorgang z.B. einer Teilungs- oder Rundlaufmessung an einem Stirnrad, sowohl bei Zweiflankenanlage der Tastkugel als auch bei Einflankenanlage allein durch Bewegen des Taststiftes und des Prüflings durchgeführt werden, ohne die Maschinenantriebe des Koordinatenmeßgerätes zu benutzen. Es lassen sich deshalb sehr kurze Meßzeiten erreichen. Lediglich für Messungen an linearen Verzahnungen also z.B. an Zahnstangen übernimmt das Koordinatenmeßgerät mit seinen Antrieben die Positionierung des Tastkopfes von Zahnlücke zu Zahnlücke.

Weitere Vorteile der Erfindung ergeben sich aus den in den Unteransprüchen aufgeführten Merkmalen und der nachstehenden Beschreibung von Ausführungsbeispielen anhand der beigefügten Zeichnungen.

Von denen in Zeichnungen dargestellten Figuren sind

Fig. 1     eine Prinzipskizze eines zur Verzahnungsmessung eingesetzten Koordinatenmeßgerätes;

Fig. 2     ein Diagramm, das den Bewegungsablauf der Maschinenschlitten ($x_M$) und des Taststifts ($x_T$) des Koordinatenmeßgerätes aus Fig. 1 bei einem Antastvorgang zeigt;

Fig. 3     ist eine detailliertere perspektivische Darstellung des in Fig. 1 benutzten messenden Tastkopfs (2);

Fig. 4     ist eine Prinzipskizze, die die Auslenkungs- und Meßbereiche des Taststifts (3) aus Fig. 3 in zwei Koordinaten darstellt;

Fig. 5     ist eine Prinzipskizze zur Verdeutlichung des erfindungsgemäßen Verfahrens bei Messungen mit Zweiflankenanlage;

Fig. 6     ist eine Prinzipskizze zur Verdeutlichung des erfindungsgemäßen Verfahrens bei Messungen mit Einflankenanlage;

Fig. 7     ist eine Prinzipskizze zur Verdeutlichung des erfindungsgemäßen Verfahrens bei Messungen mit Einflankenanlage gemäß einem alternativen, zweiten Ausführungsbeispiel.

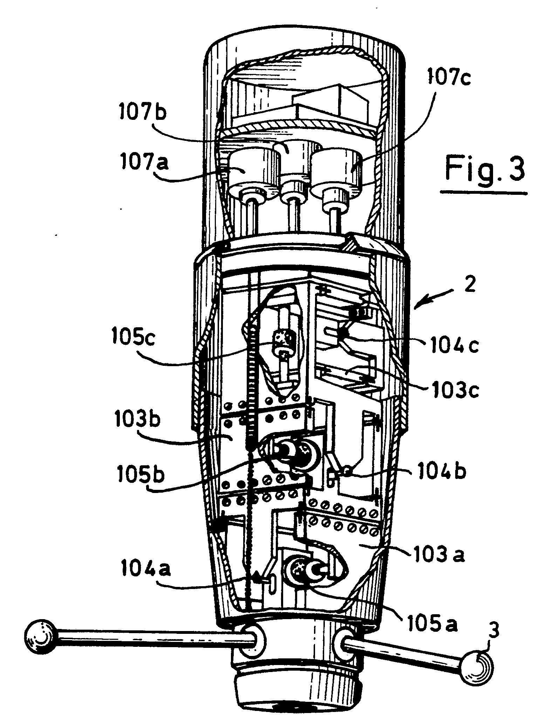

Der in Fig. 3 dargestellte Tastkopf vom messenden Typ besitzt im wesentlichen den in der DE-PS 22 42 355 beschriebenen Aufbau. Die Beweglichkeit des mit (3) bezeichneten Taststiftes wird durch übereinander angeordnete Federparallelogramme (103a,b,c) sichergestellt. Mit (104a,b,c) sind Rasten bezeichnet, über die der Taststift in den drei Koordinaten (x,y,z) im Nullpunkt der zugehörigen Meßbereiche geklemmt werden kann. Zur Messung der Auslenkung des Taststifts (3) gegenüber dem Tastkopf (2) dienen Tauchspulensysteme (105a,b,c), die den Federparallelogrammen (103) zugeordnet sind. Im oberen Teil des Tastkopfes (2) sind Kraftgeneratoren (107a,b,c) vorgesehen, die mit den beweglichen Teilen der einzelnen Federparallelogramme (103a,b,c) für die drei Koordinatenrichtungen (x,y und z) über nicht näher dargestellte Hebelgetriebe verbunden sind. Sie dienen zur Einstellung der Meßkraft in diesen Koordinatenrichtungen, die der Taststift auf das anzutastende Werkstück ausübt. Mit Hilfe dieser Kraftgeneratoren (107) läßt sich der Taststift (3) auch gegenüber dem Tastkopf (2) auslenken.

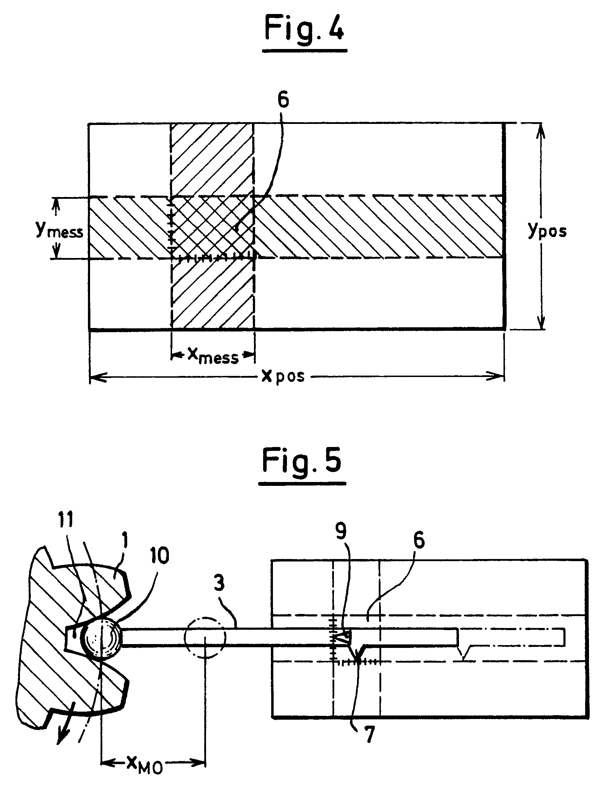

Die durch die Tauchspulen (105) definierten Meßbereiche sind sehr viel kleiner als die Bereiche der möglichen Auslenkung des Taststifts (3). Dies ist in Fig. 4 skizziert, die eine Projektion der Meßbereiche ($x_{mess}$ und $y_{mess}$) innerhalb der Bereiche der möglichen Auslenkung ($x_{pos}$ und $y_{pos}$) der Federparallelogramme (103a und 103b) in einer Ebene zeigt. Wie Fig. 4 zu entnehmen ist, wurde der Auslenkungsbereich ($x_{pos}$) in x-Richtung gegenüber dem Auslenkungsbereich ($y_{pos}$) in y-Richtung erweitert. Dies geschah einfach dadurch, daß die Schenkel das den Taststift (3) in x-Richtung führenden Parallelogramms (103a) verlängert wurden.

Das erfindungsgemäße Verfahren läßt sich nun mit Hilfe eines Tastkopfes des in Fig. 3 bzw. Fig. 4 skizzierten Typs wie folgt durchführen:

Bei Messungen, für die wie in Fig. 5 skizziert eine Zweiflankenanlage der Tastkugel (10) in der Zahnlücke (11) des Prüflings (1) gefordert wird, wird der Tastkopf (2) mit in der gestrichelt gezeichneten Stellung zurückgezogenem Taststift (3) mit Hilfe der Antriebe der Meßmaschine gegenüber der zu vermessenden Zahnlücke (11) positioniert. Anschließend wird der Taststift (3) mit Hilfe eines der Meßkraftgeneratoren (107a) im Tastkopf mit konstanter Kraft in x-Richtung in die Zahnlücke (11) eingefahren, bis die Tastkugel (10) an beiden Flanken in der Zahnlücke anliegend zur Ruhe kommt. Der Taststift (3) ist dabei in der y-Richtung entklemmt.

Der Abstand ($x_{M0}$), zwischen der Position, in der die Tastkugel (10) mit Hilfe der Antriebe des Koordinatenmeßgerätes positioniert wurde, und der durchgezogen bezeichneten Position, in der sie an beiden Zahnflanken anliegt, ist so gewählt, daß sich der als Zeiger (7) symbolisierte Index für das Messen in x-Richtung im zulässigen Meßbereich ($x_{mess}$) der zugehörigen Tauchspule (105a) befindet. Gleiches gilt auch für den vereinfacht als Zeiger (9) dargestellten Index für den zweiten Meßbereich ($y_{mess}$).

Nach Aufnahme der zugehörigen Meßwerte zieht der Kraftgenerator (107a) im Tastkopf (2) den Taststift (3) wieder aus der Zahnlücke zurück und der Prüfling (1) wird mit Hilfe des Drehtisches, auf dem er aufliegt, um eine Zahnlücke weiterbewegt. Anschließend wiederholt sich der geschilderte Vorgang. Während der gesamten Messung verändert sich die Lage des Tastkopfes (2) gegenüber dem Prüfling (1) nicht, d.h. die Maschinenantriebe des Koordinatenmeßgerätes bleiben stillgesetzt.

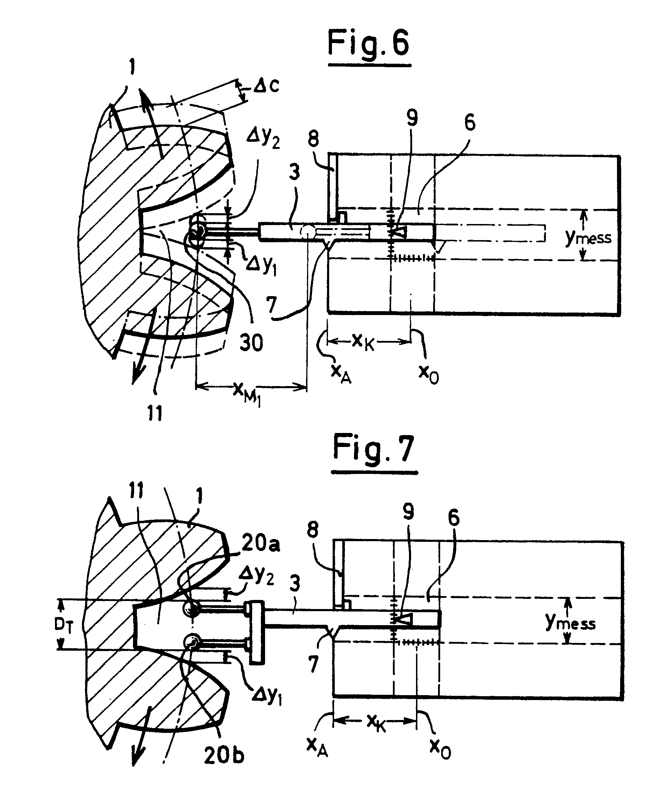

Zur Durchführung von Messungen mit Einflankenanlage der Tastkugel ist im Tastkopf ein Präzisionsanschlag für den Taststift (3) vorgesehen, der in der Vereinfachten Skizze nach Fig. 6 mit (8) bezeichnet ist. Dieser Anschlag liegt außerhalb des Meßbereiches ($x_{mess}$) für den Taststift, jedoch innerhalb des Bewegungsbereiches ($x_{pos}$). Wenn der Taststift (3) mit Hilfe des für die x-Auslenkung vorgesehenen Meßkraftgenerators (107a) gegen diesen Anschlag (8) gefahren wird, befindet er sich in einer Position, deren Abstand zum Nullpunkt ($x_0$) des Meßbereiches ($x_{mess}$) mit ($x_K$) bezeichnet ist. Der durch einmalige Kalibrierung gewonnene Wert für ($x_K$) ist im Rechner der Meßmaschine gespeichert.

Vor dem eigentlichen Meßvorgang mit Einflankenanlage der in Fig. 6 mit (30) bezeichneten Tastkugel in der Zahnlücke (11) wird der Tastkopf (2) mit zurückgezogenem Taststift (3), d.h. in der gestrichelt dargestellten Stellung gegenüber dem Prüfling (1) positioniert. In dieser Position besitzt die Tastkugel (30) einen Abstand ($x_M$) vom Teilkreis des Prüflings. Der Abstand ($x_M$) ist so gewählt, daß die Tastkugel nach Einfahren des Taststifts (3) in die Zahnlücke (11) genau dann auf dem Teilkreis des Prüflings (1) liegt, wenn der Taststift (3) gegen den Anschlag (8) gefahren ist.

Nach dem Einfahren des Taststifts (3) in die Zahnlücke wird der Prüfling (1) um weniger als eine halbe Zahnlückenbreite in die strichpunktiert dargestellte Position gedreht. Die Zahnflanke besitzt dann einen Abstand $\Delta$ y1 von der Tastkugel, der kleiner als der zulässige Meßbereich ($y_{mess}$/2) in der zum Teilkreis tangentialen Koordinate (y) ist. Anschließend wird der Taststift (3) mit Hilfe des zweiten Meßkraftgenerators (107b) in y-Richtung ausgelenkt, bis er die Zahnflanke berührt und der zugehörige Meßwert aufgenommen wird.

Der gleiche Vorgang wiederholt sich nun für die zweite Zahnflanke, indem erst der Prüfling (1) in die gestrichelt gezeichnete Stellung bewegt und dann der Taststift (3) um den Betrag $\Delta$ y2 entgegengesetzt ausgelenkt wird. Zum Austasten aus der Zahnlücke (11) wird der Taststift (3) wieder zurückgezogen, der Prüfling (1) um exakt eine Teilung weiterbewegt und der geschilderte Vorgang für die nächste Zahnlücke wiederholt.

Auch der hier beschriebene Meßvorgang mit Einflankenanlage der Tastkugel (30) wird komplett durchgeführt, ohne daß der Tastkopf (2) durch die Antriebe der Meßmaschine bewegt werden müßte. Das mehrfache Drehen des Prüflings (1) in die gestrichelt und strichpunktiert gezeichnete Stellung läßt sich vermeiden, wenn wie in Fig. 7 skizziert für die Messungen mit Einflankenanlage am Taststift (3) zwei Tastkugeln (20a und b) befestigt werden, deren Abstand bzw. der mit (DT) bezeichnete effektive Durchmesser so an die Breite der Zahnlücke im Abstand des Teilkreises angepaßt ist, daß die verbleibenden Abstände $\Delta$ y1 und $\Delta$ y2 zwischen den Kugeln (20a und 20b) und den Zahnflanken innerhalb des zulässigen Meßbereiches ($y_{mess}$) liegen. Alternativ kann auch eine einzige Kugel mit entsprechend groß gewähltem Durchmesser (DT) eingesetzt werden.

Anhand der Figuren 5-7 wurden Teilungsmessungen mit punktweiser Antastung der Zahnflanken beschrieben. Es ist jedoch klar, daß auf die gleiche Weise auch Flankenlinien gemessen werden können, indem nach dem Antasten der Zahnflanken der Taststift (3) entlang der dritten, in den Figuren nicht dargestellten Koordinate (z), bewegt wird.

**Ansprüche**

1. Verfahren zur Messung von Verzahnungen mit Hilfe eines Koordinatenmeßgerätes, das einen Tastkopf (2) mit einem in mehreren Raumrichtungen (x,y) auslenkbaren Taststift (3) besitzt, wobei die Meßbereiche ($x_{mess}$, $y_{mess}$) in den einzelnen Koordinatenrichtungen (x,y) kleiner als die jeweiligen Auslenkungsbereiche ($x_{pos}$, $y_{pos}$) für den Taststift (3) sind und der Tastkopf Kraftgeneratoren (107a,b,c) enthält, über die der Taststift (3) ausgelenkt werden kann, dadurch gekennzeichnet, daß
   - der Tastkopf (2) mit zurückgezogenem und außerhalb des zulässigen Meßbereichs (6) befindlichen Taststift (3) in einem vorgegebenen Abstand ($x_{MO}$, $x_{M1}$) gegenüber der zu vermessenden Zahnlücke (11) des Prüflings (1) positioniert und die Antriebe des Koordinatenmeßgerätes in dieser Postion stillgesetzt werden,
   - der Taststift (3) anschließend über die Meßkraftgeneratoren (107a,b,c) relativ zum Tastkopf (2) bewegt und in die Zahnlücke (11) eingefahren wird.

2. Verfahren nach Anspruch 1, dadurch gekennzeichnet, daß für Messungen mit Zweiflankenanlage der Tastkugel (10) am Taststift (3) der Abstand ($x_{MO}$) zwischen der vorgegebenen Position und der Zahnlücke (11) so gewählt ist, daß der Taststift (3) bei Anlage der Tastkugel (10) an den beiden Zahnflanken innerhalb der zulässigen Meßbereiche ($x_{mess}$,$y_{mess}$) in zwei Koordinatenrichtungen (x,y) arbeitet.

3. Verfahren nach Anspruch 1, dadurch gekennzeichnet, daß für Messungen mit Einflankenanlage der Tastkugel (20a,20b;30) der Abstand ($x_{M1}$) zwischen der vorgegebenen Position und der Zahnlücke so gewählt ist, daß der Taststift (3) entlang einer Koordinate (x) in die Zahnlücke (11) so weit eingefahren werden kann, bis er an einem Präzisionsanschlag (8) im Tastkopf (3) anliegt, dessen Lage ($x_K$) in Bezug auf den Nullpunkt ($x_0$) des Meßbereichs ($x_{mess}$) im Rechner des Koordinatenmeßgeräts abgespeichert ist, und bezüglich der zweiten Koordinate (y) im zulässigen Meßbereich ($y_{mess}$) liegt.

4. Verfahren nach Anspruch 1, dadurch gekennzeichnet, daß für die Vermessung von Zahnrädern (1) der Übergang zur nächsten Zahnlücke dadurch erfolgt, daß der Taststift (3) bei stillgesetzten Maschinenantrieben allein durch eine Taststiftauslenkung wieder aus der Zahnlücke (11) herausgeführt wird und anschließend das auf einem Drehtisch aufgespannte Zahnrad (1) weiterbewegt wird, und die Maschinenantriebe ($x_M$, $y_M$) des Koordinatenmeßgerätes während des kompletten Meßvorganges stillgesetzt bleiben.

5. Verfahren nach Anspruch 1, dadurch gekennzeichnet, daß für die Vermessungen von Zahnstangen der Übergang zur nächsten Zahnlücke dadurch erfolgt, daß der Taststift (3) allein durch eine Taststiftauslenkung aus der Zahnlücke herausgeführt wird und anschließend das Koordinatenmeßgerät den Tastkopf in Bezug auf die nächste Zahnlücke positioniert.

6. Verfahren nach Anspruch 2, dadurch gekennzeichnet, daß der Taststift (3) mit konstanter, vom Taststiftweg unabhängiger Meßkraft in die Zahnlücke (11) eingefahren wird, bis die Tastkugel (10) in Ruhe beidseitig an den Zahnflanken des Prüflings (1) anliegt, und dann der Meßwert gewonnen wird.

7. Verfahren nach Anspruch 3, dadurch gekennzeichnet, daß der Taststift (3) zuerst entlang einer ersten Koordinate (x) in die Zahnlücke (11) eingefahren wird, bis er an dem Präzisionsanschlag (8) anliegt, und der Taststift (3) anschließend entlang der weiteren Koordinate (y) ausgelenkt wird.

8. Verfahren nach Anspruch 7, dadurch gekennzeichnet, daß der effektive Durchmesser ($D_T$) des Tastelements (20a,20b) in Relation zu den Abmessungen der Zahnlücke (11) so gewählt ist, daß bei der Auslenkung des Taststifts (3) entlang der weiteren Koordinate (y) ein Antasten innerhalb des zulässigen Meßbereiches ($y_{mess}$) dieser Koordinate (y) erfolgt.

9. Verfahren nach Anspruch 7, dadurch gekennzeichnet, daß vor dem Auslenken des Taststifts (3) entlang der weiteren Koordinate (y) das Zahnrad (1) um einen Betrag $\Delta C$ von weniger als einer Zahnlückenbreite weitergedreht wird.

10. Einrichtung zur Durchführung des Verfahrens nach einem der Ansprüche 1 bis 9, bestehend aus einem Koordinatenmeßgerät mit einem in mindestens zwei Achsen ($x_M, y_M$) positionierbaren Tastkopf (2), der einen in mehreren Raumrichtungen ($x_T, y_T$) auslenkbaren Taststift (3) trägt, wobei die Meßbereiche ($x_{mess}, y_{mess}$) des Taststifts (3) kleiner als die jeweiligen Auslenkungsbereiche ($x_{pos}, y_{pos}$) für den Taststift (3) sind und wobei im Tastkopf Kraftgeneratoren (107a,b,c) vorgesehen sind, über die der Taststift (3) ausgelenkt werden kann, dadurch gekennzeichnet, daß für mindestens einen der Auslenkungsbereiche (x) des Taststifts (3) ein außerhalb des zulässigen Meßbereichs ($x_{mess}$) liegender Präzisionsanschlag (8) vorgesehen ist, dessen Lage ($x_K$) in Bezug auf den Nullpunkt ($x_0$) des Meßbereiches ($x_{mess}$) in dieser Koordinate kalibriert ist.

11. Einrichtung nach Anspruch 10, dadurch gekennzeichnet, daß das Koordinatenmeßgerät eine Klemmeinrichtung enthält zur Fixierung der Maschinenachsen in den Positionen ($x_{M0}, x_{M1}$), in denen die Antriebe stillgesetzt sind.

12. Einrichtung nach Anspruch 10, dadurch gekennzeichnet, daß der Tastkopf einen in einer Richtung (x) erweiterten Bewegungsbereich ($x_{pos}$) für den Taststift (3) besitzt.

**Claims**

1. A method of measuring toothings by means of a coordinate measuring instrument which has a probe (2) having a stylus (3) which can be deflected in several directions in space (x,y), the measurement ranges ($x_{meas}, y_{meas}$) in the individual coordinate directions (x,y) being smaller than the corresponding deflection ranges ($x_{pos}, y_{pos}$) for the stylus (3) and the probe containing force generators (107a,b,c) via which the stylus (3) can be deflected, characterized by the fact that

- the probe (2) with the stylus (3) pulled back and located outside of the permissible measurement range (6) is positioned at a predetermined distance ($x_{M0}$, $x_{M1}$) from the tooth gap (11) of the test piece (1) which is to be measured and the drives of the coordinate measuring instrument are stopped in this position,

- the stylus (3) is then moved via the measurement force generators (107a,b,c) relative to the probe (2) and introduced into the tooth gap (11).

2. A method according to Claim 1, characterized by the fact that for measurements with two-flank application of the contact ball (10) on the stylus (3) the distance ($x_{M0}$) between the predetermined position and the tooth gap (11) is so selected that die stylus (3), upon the application of the contact ball (10) against the two tooth flanks works within the permissible measurement ranges ($x_{meas}, y_{meas}$) in two coordinate directions (x,y).

3. A method according to Claim 1, characterized by the fact that for measurements with single-flank application of the contact ball (20a, 20b; 30) the distance ($x_{M1}$) between the predetermined position and the tooth gap is selected in such a manner that the stylus (3) can be moved along one coordinate (x) into the tooth gap (11) until it rests against a precision stop (8) in the probe (3) the position ($x_K$) of which stop with respect to the zero point ($x_0$) of the measurement range ($x_{meas}$) is stored in the computer of the coordinate measuring instrument and lies in the permissible measurement range ($y_{meas}$) with respect to the second coordinate (y).

4. A method according to Claim 1, characterized by the fact that for the measuring of gearwheels (1) the transition to the next tooth gap takes place in the manner that the stylus (3), when the machine drives are stopped, is moved out again from the tooth gap (11) solely by a deflection of the stylus, whereupon the gearwheel (1) which has been clamped on a turntable is moved further, and the measurement drives ($X_M, y_M$) of the coordinate measuring instrument remain stopped during the entire measuring process.

5. A method according to Claim 1, characterized by the fact that for the measuring of racks the transfer to the next tooth gap takes place in the manner that the stylus (3) is moved out of the tooth gap solely by a deflection of the stylus and the coordinate measuring instrument thereupon positions the probe with respect to the next tooth gap.

6. A method according to Claim 2, characterized by the fact that the stylus (3) is moved into the tooth gap (11) with a constant measurement force which is independent of the path of the styles until the contact ball (10) rests on both sides against the tooth flanks of the test piece (1), whereupon the measurement value is obtained.

7. A method according to Claim 3, characterized by the fact that the stylus (3) is first of all moved along a first coordinate (x) into the tooth gap (11) until it rests against the precision stop (8), whereupon the stylus (3) is deflected along the other coordinate (y).

8. A method according to Claim 7, characterized by the fact that the effective diameter ($D_T$) of the contact element (20a, 20b) is so selected in relation to the dimensions of the tooth gap (11) that upon the deflection of the stylus (3) along the other coordinate (y) a probing takes place within the permissible measurement range ($y_{meas}$) of this coordinate (y).

9. A method according to Claim 7, characterized by the fact that before the deflection of the stylus (3) along the other coordinate (y) the gearwheel (1) is turned further by an amount C which is smaller than the width of a tooth.

10. A device for carrying out the method according to Claims 1 to 9, comprising a coordinate measuring instrument having a probe (2) which can be positioned in at least 2 axes ($x_M$, $y_M$) and which bears a stylus (3) which is deflectable in several directions in space ($x_T$, $y_T$), the measurement ranges ($x_{meas}$, $y_{meas}$) of the stylus (3) being smaller than the corresponding deflection ranges ($x_{pos}$, $y_{pos}$) for the stylus (3) and force generators (107a,b,c) via which the stylus (3) can be deflected being provided in the probe, characterized by the fact that for at least one of the deflection ranges (x) of the stylus (3) there is provided a precision stop (8) which lies outside of the permissible measurement range ($x_{,meas}$), the position ($x_K$) of which stop with respect to the zero point ($x_0$) of the measurement range ($x_{meas}$) is calibrated in this coordinate.

11. A device according to Claim 10, characterized by the fact that the coordinate measuring instrument contains a clamping device for fixing the axes of the machine in the positions ($x_{M0}$, $x_{M1}$) in which the drives are stopped.

12. A device according to Claim 10, characterized by the fact that the probe has a range of movement ($x_{pos}$) for the stylus (3) which is widened in one direction (x).

**Revendications**

1. Procédé pour mesurer les dentures à l'aide d'un appareil de mesure des coordonnées qui comprend une tête de contrôle (2) munie d'une touche (3) qui peut décrire une excursion dans plusieurs directions (x, y) de l'espace, les plages de mesure ($x_{mes}$, $y_{mes}$) dans les différentes directions de coordonnées (x, y) étant plus petites que les plages d'excursion ($x_{pos}$, $y_{pos}$) pour la touche (3), et la tête de contrôle contenant des générateurs de force (107a, b, c) par l'intermédiaire desquels la touche (3) peut être mise en mouvement, caractérisé en ce que
   - la tête de contrôle (2) est positionnée, alors que la touche (3) est rétractée et située en dehors de la plage de mesure admissible (6), à une distance prédéterminée ($x_{M0}$, $x_{M1}$) par rapport au creux de denture à mesurer (11) de la pièce à contrôler (1), et les entraînements de l'appareil de mesure des coordonnées sont arrêtés dans cette position,
   - la touche (3) est ensuite mise en mouvement par rapport à la tête de contrôle (2) à l'aide des générateurs de force de mesure (107a, b, c) et engagée dans le creux de denture (11).

2. Procédé selon la revendication 1, caractérisé en ce que, pour l'exécution de mesures comportant un appui de la sphère de touche (10) portée par la touche (3) contre deux flancs, la distance ($x_{m0}$) entre la position prédéterminée et le creux de denture (11) est calculée de telle manière que, lorsque la sphère de touche (10) est en appui contre les deux flancs de dents, la touche (3) travaille selon les deux directions de coordonnées (x, y) dans les limites des plages de mesure admissibles ($x_{mes}$, $y_{mes}$).

3. Procédé selon la revendication 1, caractérisé en ce que, pour l'exécution de mesures comportant un appui de la sphère de touche (20a, 20b ; 30) contre un seul flanc, la distance ($x_{M1}$) entre la position prédéterminée et le creux de denture est calculée de telle manière que la touche (3) puisse être engagée dans le creux de denture (11), en se déplaçant selon une coordonnée (x) jusqu'à ce qu'elle s'appuie contre une butée de précision (8) contenue dans la tête de contrôle (3), et dont la position ($x_K$) par rapport au point zéro ($x_0$) de la plage de mesure ($x_{mes}$) est mémorisée dans l'ordinateur de l'appareil de mesure des coordonnées, et se trouve dans la plage de mesure admissible ($y_{mes}$) relativement à la deuxième coordonnée (y).

4. Procédé selon la revendication 1, caractérisé en ce que, pour la mesure des roues d'engrenages (1), le passage au creux de denture suivant s'effectue par le fait que, alors que les entraînements à moteur sont arrêtés, la touche (3) est retirée du creux de denture (11) uniquement par une excursion de la touche et, ensuite, la roue d'engrenage (1), abloquée sur une table tournante, est avancée, et les entraînements à moteur ($x_M$, $y_M$) de l'appareil de mesure des coordonnées restent immobilisés pendant l'ensemble de l'opération de mesure.

5. Procédé selon la revendication 1, caractérisé en ce que, pour la mesure des crémaillères, le passage au creux de denture suivant s'effectue par le fait que la touche (3) est retirée du creux de denture Uniquement par une excursion de la touche et que l'appareil de mesure des coordonnées positionne ensuite la tête de contrôle par rapport au creux de denture suivant.

6. Procédé selon la revendication 2, caractérisé en ce que la touche (3) est engagée dans le creux de denture (11) avec une force de mesure constante, indépendante de la course de la touche, jusqu'à ce que la sphère (10) de la touche soit appuyée au repos, des deux côtés, contre les flancs de dents de la pièce à contrôler (1) et, ensuite, la valeur mesurée est enregistrée.

7. Procédé selon la revendication 3, caractérisé en ce que la touche (3) est tout d'abord engagée dans le creux de denture (11) en se déplaçant selon une première coordonnée (x), jusqu'à ce qu'elle soit en appui contre la butée de précision (8), et la touche (3) décrit ensuite une excursion le long de l'autre coordonnée (y).

8. Procédé selon la revendication 7, caractérisé en ce que le diamètre effectif (DT) de l'élément palpeur (20a, 20b) est calculé, par rapport aux dimensions du creux de denture (11), de telle manière que, lors de l'excursion de la touche (3) le long de l'autre coordonnée (y), il se produise une mise en appui dans les limites de la plage de mesure admissible ($Y_{mes}$) de cette coordonnée (y).

9. Procédé selon la revendication 7, caractérisé en ce qu'avant l'excursion de la touche (3) le long de l'autre coordonnée (y), la roue d'engrenage (1) est tournée d'une distance .C inférieure à une largeur de creux de denture.

10. Dispositif pour la mise en oeuvre du procédé selon une des revendications 1 à 9, comprenant un appareil de mesure des coordonnées qui possède une tête de contrôle (2) pouvant être positionnée selon au moins deux axes ($x_m$, $y_M$), et qui porte une touche (3) pouvant décrire une excursion dans plusieurs directions de l'espace ($x_T$, $y_T$), les plages de mesure ($x_{mes}$, $y_{mes}$) de la touche (3) étant plus petites que les plages d'excursion correspondantes ($x_{pos}$, $y_{pos}$) de la touche (3), et la tête de contrôle renfermant des générateurs de force (107a, b, c) sous l'action desquels la touche (3) peut décrire une excursion, caractérisé en ce que, pour au moins une des plages d'excursion (x) de la touche (3), il est prévu une butée de précision (8) placée en dehors de la plage de mesure admissible ($x_{mes}$), dont la position ($x_K$) est étalonnée par rapport au point zéro ($x_0$) de la plage de mesure ($x_{mes}$) selon cette coordonnée.

11. Dispositif selon la revendication 10, caractérisé en ce que l'appareil de mesure des coordonnées comprend un dispositif de blocage servant à arrêter les axes de la machine dans les positions ($x_{M0}$, $x_{M1}$) dans lesquelles les entraînements sont mis à l'arrêt.

12. Dispositif selon la revendication 10, caractérisé en ce que la tête de contrôle possède une plage de déplacement ($x_{pos}$) de la touche (3) qui est agrandie dans une direction (x).

## Fig.1

## Fig.2

Fig.3

107c

107b

107a

105c

103b

105b

104a

2

104c

103c

104b

103a

105a

3

# Fig. 4

# Fig. 5

# Fig. 6

# Fig. 7